# EUROPEAN PATENT APPLICATION

(11) **EP 3 425 290 A1**
(43) Date of publication of application: **09.01.2019**
(21) Application number: 18000569.6
(22) Date of filing: 29.06.2018
(51) Int. Cl.: F24D 19/10, G01K 17/08, F16K 31/00

(54) **HIGH ENERGY INTEGRATIVE SYSTEM FOR CONDENSING RADIATORS AND BOILERS**

(30) Priority: 05.07.2017 IT 201700074431
(71) Applicant: Garibaldi, Armando, 21020 Monvalle (VA) (IT)
(72) Inventor: Garibaldi, Armando, 21020 Monvalle (VA) (IT)
(74) Representative: Contessini, Pier Carlo

(57) **Abstract**

A heating system for commercial or residential buildings is described, comprising a condensation heat generator and at least one radiator supplied by a high energy efficiency v.m.g.-d.i.a. (variable metric geometry-direct integrate accounting) system, constituted by: a hollow body having a first conduit for connection to the hydraulic network and a second conduit for connection to the radiator.

Inside the hollow body the v.m.g.-d.i.a. system rotatable with respect to the hollow body is housed. The v.m.g. is a cylindrical-shaped command that includes a series of holes from four to five depending on the diametrically different radiator dimensions, from one mm to twelve mm. The v.m.g. system is placed at the radiator inlet and is able to rotate; therefore, varying its metric geometry, different fluid fractioning configurations towards the radiator are obtained; the same device is applied to the radiator return fluid which, unlike the inlet device, has one hole only.

At its inside the v.m.g. system houses the d.i.a. system d.i.a., which allows the radiator inlet and outlet temperature detecting by directly accounting the actual and real consumption.

## Description

The present invention relates to an integrating system with high energy efficiency for radiators and condensing boilers provided with v.m.g. - d.i.a. (variable metric geometry - direct integrated accounting).

Residential and commercial buildings are usually heated by radiators or heaters having several modules rigidly connected one each other wherein the hot water circulation heated by a condensation heat generator takes place.

Each radiator has an inlet conduit and an outlet conduit.

Each room has a radiator with a number of elements or modules depending on the room volume to be heated.

The heating systems are designed to ensure the user to reach desired temperatures and sometimes well over the legal values of 20 °C. The system must be able to heat a cold apartment, for example by bringing the temperature from 5 °C to 20 °C in a few hours.

The stabilizing valves are known, which coupled with thermostatic heads, should guarantee the user a certain energy saving, the thermostatic head detects the ambient temperature and expands the liquid contained within it by pressing against the shutter enclosed inside the valve body, this should stop the thermal vector flow towards the terminal.

This solution does not guarantee the user a real energy saving.

By virtue of the fact that the valve has been designed in such a way that the rod translation only allows opening or closing the duct at the desired temperature, set by the thermostatic head, which in spite of that it is not very functional or completely null considering its position, placed at about a meter from the floor level in a obligatory and completely standardized position, it cannot guarantee comfort to the user and even worst an energy saving; there is a technical problem related to its dynamic principle, i.e. the thermostatic head in its current state starts to activate when the temperature has reached in the environment much higher levels than those permitted by law, rendering the environment saturated.

It has been known for long time the use of systems that manage the building temperature, that are simple thermostats able to compare the desired temperature set by the user with the temperature detected in the environment, allowing to block the heat generator when the set temperature is reached, and to re-start it again when the ambient temperature falls by a few degree fractions. This device makes without functionality the thermostatic valve and responsible for waste energy.

This type does not fall within current standards, disadvantaging the use of new condensing generators.

The patent application published with n. DE 10 2009 010493 A1 describes a heating system equipped with a condensing boiler, a heating fluid pump, a heating fluid supply pipe, a heating fluid return line and a radiator. A return temperature valve is located in the return line of the heating medium. The radiators of the heating radiator valves are assigned to each upstream heating element, designed as thermostatic valves and operated by a thermostat or an electronic controller to allow adjustment of the desired room temperature.

The described above technical problems lead to excessive energy consumption due to the water amount to be heated, do not guarantee the new condensing heat generator performances and their performances does not guarantee the user a saving.

The object of the invention is to provide heating systems for residential and commercial buildings capable of solving the technical problems described above.

This object is achieved by a building heating system including: a) a condensation heat generator, b) at least one radiator provided with a valve for supplying a fluid to said radiator, c) a hollow body, d) a first conduit connecting said heating system to the hydraulic network outside the system and e) a second conduit connecting said heating system to the radiator, wherein the system characterized in that within the hollow body a hollow cylindrical selector including a series of diametrically different lateral holes is housed, wherein the hollow cylindrical selector is rotatable with respect to the hollow body to obtain different configurations, and wherein said hollow cylindrical selector comprises at its inside a vertically movable probe for detecting the fluid direct temperature at the radiator inlet, and a terminal shutter for closing said first conduit connected to the network.

The v.m.g. system is a rotatable hollow cylinder inside the hollow body, it includes a series of holes, for example from four to five diametrically different, for example from twelve mm to one mm. The increase in the diameter and in the corresponding holes is proportional to the size of the radiator (also called "terminal"). The rotatable v.m.g. system with respect to the hollow body allows the radiator to be powered by alternating the different diameters; when the diameter of the holes metrically changes, energy saving different configurations are obtained.

By varying the position and therefore the diameter, the heat transfer flow is reduced, this ensures a lower fluid circulation inside the terminal/radiator, always assuring a thermal exchange with the environment and a fluid return towards the generator with a greater ΔT°, therefore colder, favoring condensing generators and further increasing savings. The same device is applied to the fluid return of the terminal which, unlike the inlet device, has only one hole.

The d.i.a. system is integrated into the v.m.g. system and takes on two functions.

The first function is to be vertically mobile allowing the closure of the first conduit connected to the network.

The second function allows the probe contained at its inside to detect the "direct" temperature of the fluid entering the terminal, comparing it with the "direct" temperature of the fluid exiting the terminal, this allows to measure the real consumption.

It should also be noted that both v.m.g.-d.i.a. systems are almost entirely made of PTFE (Teflon), this assures a very low friction coefficient assuring an excellent rotability of the v.m.g. system inside the hollow body, and an excellent vertical translation of the d.i.a. system. The purpose of this material is to reduce the device "transmittance", and therefore a further energy recovery and a more accurate direct temperatures reading.

These and other features of the present invention will be made more evident by the following detailed description of an embodiment thereof illustrated by way of nonlimiting example in the attached drawings:
Figure 1 shows a longitudinal view of the v.m.g.-d.i.a. system with adjustment knob;
Figure 2 shows a perspective exploded view of the v.m.g.-d.i.a. system;

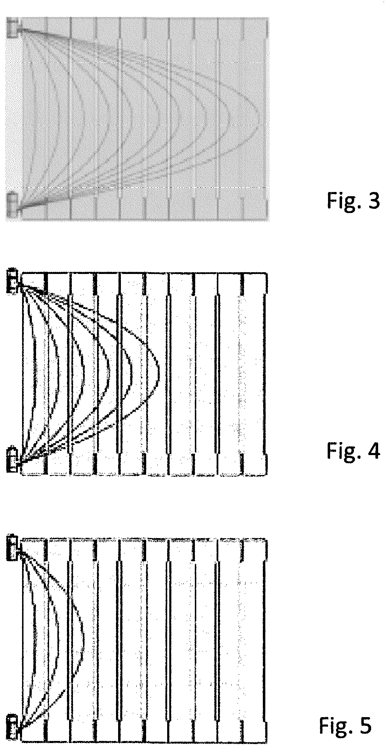

Figure 3 shows a front view of a terminal/radiator with a maximum speed configuration;
Figure 4 shows a front view of a terminal/radiator with an intermediate configuration;
Figure 5 shows a front view of a terminal/radiator with a minimum configuration.

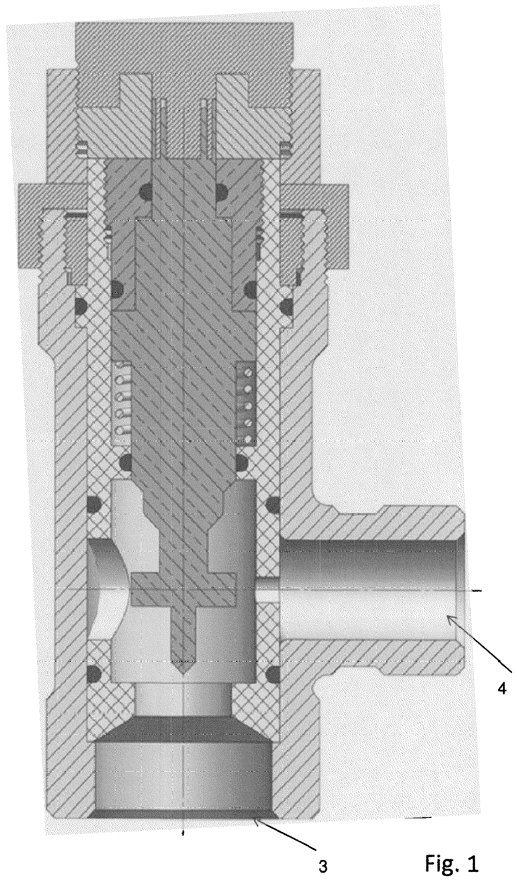

The system illustrated in Figures 1-2 includes a first conduit 3 connecting to the hydraulic network and a second conduit 4 connecting to the terminal/radiator; inside the system body 2 the rotatable cylindrical selector v.m.g. system 11 is housed which comprises four or five metrically variable holes 13 from two mm to twelve mm for inletting into the terminal, and a single hole for the system exiting the terminal. The v.m.g. system 11 is composed of an internal core 14 in brass-plated metal internally and externally coated by PTEE (teflon) by die-casting, wherein the internal core in brass-plated metal 14 has a series of small holes through which during the die casting phase of the PTEE (teflon) such material creates a connection between the inner lining and the external lining producing a reinforcement between the materials, developing stiffness between them thus strengthening the compression and tensile torsion of the v.m.g. system. A circular seal is inserted inside the brassed core 14 in a special seat and a second circular seal is placed in a special seat in the external portion of the brassed core 14; during the pressure of the PTEE (teflon) both the circular seals are incorporated ensuring a tight seal between the layers of the materials; two circular seals 12 placed in appropriate locations of the v.m.g. system assure the fluid seal between the body of the system 2 and the variable metric geometry system 11. A threaded ring 15 is coupled to the internal thread of the body of the system 2 and assures the axial blocking of the v.m.g. system 11 with a slight looseness adapted to the rotation of the v.m.g. system controlled by an external knob.

The variable metric geometry system can assure at least four different configurations.

When the first hole 13 is metrically larger than the other ones 13 and aligned with the second conduit 4, a total flow of thermal-convector fluid supplying the terminal at full capacity is assured, by rotating the knob the system varies the metric geometry of the holes 13 "splitting" the fluid flow; each hole 13 represents a different configuration.

When the second hole 13 is metrically smaller than the first one and aligned with the second conduit 4, a 25% lower thermal fluid flow regime is obtained with respect to the first configuration.

When the third hole 13 is metrically smaller than the first and second holes and aligned with the second conduit 4, a 50% lower thermal vector fluid flow is obtained with respect to the first configuration; with the last holes metrically lower than those previously mentioned, a lower fluid flow of at least 85% compared to the first configuration may be obtained.

Inside the system v.m.g., the system d.i.a. 22 is housed; the system v.m.g. has a cylindrical body with diametrically different sections, and at its inside the probe 22. In the first section, the cylinder has two different diameters, the function of the smaller and more protruding diameter is to contain the temperature sensor 20, while the function of the larger diameter 21 is to close the first conduit 3 connected to the network. In the central part, the cylinder section is further reduced to house a spring 19, and then the next section 24 is again increased to have a radial surface sufficient to lock the spring 19 and which in turn produces the force necessary to translate the d.i.a. system, and to ensure that the axial motion is not compromised by deflections; a gasket is designed to contain fluid infiltration towards the outside. Finally, the section is reduced extending towards the outside of the system with a connector; a threaded closure element 26 is coupled to the v.m.g. system with a series of gaskets suitable for making hermetic the matching of the two systems.

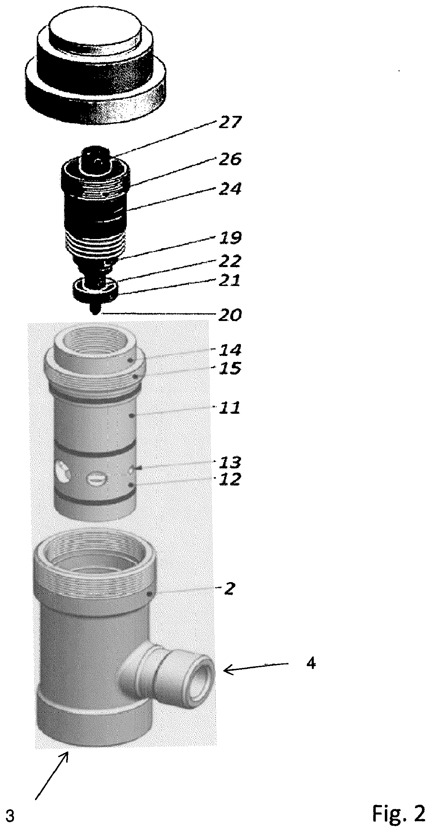

The connector 27 extending towards the outside of the system allows an external knob (fig.2) having an internal thread coupled to a threaded body and firmly connected to the body of the system 2 to implement an ideal screw mechanism for the axial translation of the d.i.a. system compared to the v.m.g. system, in order to isolate the terminal/radiator from the hydraulic network.

It should be underlined as previously mentioned, that the d.i.a. system is a temperature probe 20 extending outwards, ending with the connector 27; this allows specific knobs to come into contact with the probe 20 and to detect the temperature at the inlet and at the outlet of the terminal, accurately accounting the heat amount that is being used.

The above described embodiment seems to be complex; on the contrary, both the v.m.g. and the d.i.a. systems are easily achievable thanks to the use of PTEE by die-casting with molds; the use of this material allows a dynamic, functional, useful, long lasting and undoubtedly productive product to be obtained.

As far as operation is concerned, at the current plant status, the process is carried out by means of the heat generator or commonly called condensing boiler. The operation is quite simple: the user in the winter period activate the heating system, the boiler heats the thermo-vector fluid and a circulator device (a variable flow hydraulic pump) distributes the fluid to the terminals or radiators which in turn distribute the due heat into the surrounding environment. The condensing boiler, on the other hand, can recover most of the latent heat of the fumes before they are expelled through the chimney. The "condensation" technology makes it possible to remove heat from the fumes until they return to the state of saturated liquid or, in some cases, wet steam, with the heat recovery used to preheat the water returning to the boiler. In order to maximize the boiler yield a very important factor is to be taken into account; the return fluid must be very cold, in order to optimize the condensation efficiency.

The high energy efficiency v.m.g.-d.i.a. integration system for radiators makes it possible to optimize the heating system; once the devices have been installed and the heat generator has been activated, the v.m.g. technology actually allows the desired temperature to be individually managed for each single room. It is very important that, by setting and then varying the geometry of the v.m.g. system, it is possible to intervene where it was not possible to intervene by "fractioning" the delivery fluid.

Compared to traditional systems managed by simple valves, the v.m.g. system, thanks to its innovative and intelligent complete regulation, is able to operate optimizing both the comfort and the return temperature. The user intervening on the system can decide to set the proper temperature in each single room, to manage his system and consequently to reduce energy consumption, and favoring a decidedly cold return by increasing the yield of the condensing heat generator.

Therefore, once the integration system has been installed, the user has the choice to configure his terminal/radiator without waste exceeding, by "fractioning" the delivery flow.

By configuring the system g.m.v. with the respective metrically different holes, it is possible to obtain the maximum condition, intermediate condition, up to the minimum condition respectively by passing from the largest hole, intermediate hole and up to the smallest hole.

The energy saving of the solution described above with respect to the known solutions is evident, due to the delivery flow "fractioning": the terminal receives only the right amount of thermo-vector fluid capable of satisfying the user's request with regard to the ambient temperature, but at the same time, this hot fluid has the time to exchange and transfer heat into the environment, ensuring comfort, and to exchange heat with the liquid contained inside the radiator ensuring a much colder fluid return towards the generator than the current devices.

The energy saving of the solution described above compared to the known plants is evident, the yield increase is quantifiable at least in the order of 50% with economic benefits easy to be understood.

It should be pointed out that the object of the present invention can be easily applied to existing systems in addition to those of new construction; in fact, it is sufficient to eliminate the old valves and the system is ready for a high energy efficiency intelligent use.

It should be noted that the installing expense of the v.m.g.-d.i.a. system is easily amortized in over just a year, given the immediate and significant yield increase.

The aforementioned embodiment is provided with a manual control; in this case the user manages his system and the relative temperatures in each single room. However, automated control systems are provided for the v.m.g. system and for the measurement of the temperatures at the terminal inlet and outlet for the d.i.a. system.

The aforementioned automated forms can be referred to as: basic, pro, and evolution, each of which takes on specific functions.

The basic form is a device with digital reader that once connected allows to manually manage the flow "fractioning" through the v.m.g. system and to read the inlet and outlet fluid temperature through the d.i.a. system.

The pro form is a device with digital reader that once connected allows to manually manage the flow "fractioning" trough the v.m.g. system and to read the inlet and outlet fluid temperature through the d.i.a. system, accounting the real consumption of each radiator/terminal by exchanging data with an appropriate management software.

The evolution form is a device with a digital reader that once connected allows to autonomously manage the flow fractionation through the v.m.g. system interacting with the surrounding environment; the interactive evolution system is able, once set, to better manage the temperatures in each single room by varying the metric of the holes in the v.m.g. system, thus carrying out various operations in complete autonomy, in addition to detect the inlet and outlet fluid temperature through the d.i.a. system accounting for the real consumption of each radiator/terminal exchanging data with an appropriate management software.

The aforesaid forms of listed above management automation can be powered by battery or by current; they include motors for the management of the v.m.g. system, are equipped with forced anti-tampering system, connection to the d.i.a. system and wi-fi data transmission, wireless technology that allows to detect and transmit consumption data even outside the apartment in a safe, reliable and continuous way.

The above described management automation systems are useful and diversified, interfacing with every need, useful for autonomous systems, but even more for centralized systems; each apartment can have its own control unit which in turn is seen and coded by a central unit simplifying the consumption calculation with extreme precision and intervening in the entire building heat uniformity eliminating waste and increasing energy efficiency.

## Claims

1. Building heating system comprising: a) a condensation heat generator, b) at least one radiator provided with a valve (2) to supply a fluid to said radiator, c) a hollow body, d) a first conduit (3) connecting said heating system to the hydraulic network outside the system and e) a second conduit (4) connecting said heating system to the radiator, the system being **characterized in that** at the inside of the hollow body a hollow cylindrical selector (11) which includes a series of lateral holes (13) of different diameters is housed, wherein the hollow cylindrical selector (11) is rotatable with respect to the hollow body to obtain different configurations, and wherein said hollow cylindrical selector (11) comprises inside a vertically movable probe (22) for detecting the direct temperature of the fluid entering the radiator, and a shutter (21) for closing said first conduit (3) connected to the network.

2. System according to claim 1, **characterized in that** said hollow cylindrical selector (11) comprises a threaded ring (15) coupled to the internal thread of the valve body (2).

3. System according to any one of Claims 1 or 2, wherein said hollow cylindrical selector (11) houses inside therein a substantially cylindrical body with diametrically different sections.

4. System according to claim 3, wherein said substantially cylindrical body comprises said probe (22), said shutter (21) and furthermore a spring (19), an internal temperature sensor (20), a gasket (24), a threaded closing element (26) for matching with the cylindrical selector (11) and a connector (27) externally coupled with specific knobs for the detected data transmission.

5. System according to any of the previous claims **characterized in that** it comprises a plurality of radiators and for each radiator a control unit for managing the activities.

6. System according to any one of the preceding claims, which comprises automated control systems for measuring the inlet and outlet radiator temperatures.

7. System according to claim 6, wherein said automated systems comprise a device with digital reader which, once connected, allows to manually manage the flow "fractioning" and to read the fluid in and out temperature.

8. System according to claim 6 or 7, wherein said automated systems account for the real consumption of each radiator/terminal exchanging data by an appropriate management software.

9. System according to claim 6 or 7 or 8, wherein said automated systems manage each individual environment temperatures by varying the metric of said holes.

10. System according to any one of Claims 6 to 9, wherein said automated systems are provided with at least one of the devices selected from battery or current supply device, drive motors, forced tamper-proof system, WI-FI data transmission, wireless allowing consumption detection and transmission even outside the building.
